# EUROPEAN PATENT SPECIFICATION

(11) **EP 3 550 124 B1**
(45) Date of publication and mention of the grant of the patent: **26.10.2022**
(21) Application number: 19167146.0
(22) Date of filing: 03.04.2019
(51) Int. Cl.: F02C 7/18, F01D 25/00

(54) **FLUID INJECTION COOLING**
FLÜSSIGKEITSEINSPRITZKÜHLUNG
REFROIDISSEMENT PAR INJECTION DE FLUIDE

(30) Priority: 05.04.2018 US 201815946251
(43) Date of publication of application: 09.10.2019
(73) Proprietor: Raytheon Technologies Corporation, Farmington, CT 06032 (US)
(72) Inventor: STILLMAN, William P., Sturbridge, MA 01566 (US); THORNTON, Lane Mikal, Tolland, CT 06084 (US); DEVORE, Matthew A., Rocky Hill, CT 06067 (US); HENDRICKS, Gavin, Manchester, CT 06040 (US)
(74) Representative: Dehns

(56) References cited:
- EP-A1- 0 978 635
- EP-A1- 2 418 367
- GB-A- 861 632
- US-A- 5 839 271

## Description

### BACKGROUND

The present disclosure relates to turbine cooling systems in gas turbine engines.

A gas turbine engine on an aircraft typically includes a fan section, a compressor section, a combustor section and a turbine section. Air entering the compressor section is compressed and delivered into the combustor section where it is mixed with fuel and ignited to generate a high-speed exhaust gas flow. Prior to entry into the combustor section, the compressed air exiting the compressor section may have a high temperature and may be traveling at a high velocity. In order to guide the air to the combustor, as well as to reduce the velocity of the compressed air and to condition it for combustion, the gas turbine engine may also include a diffuser case. After exiting the combustor, the high-speed exhaust gas flow expands through the turbine section to drive the compressor and the fan section. The high-speed exhaust gas flow in the turbine section has a high temperature and cooling of the components in the turbine section is required to reduce corrosion in the turbine section and to extend the life of the turbine section. Cooling in the turbine section is especially important during takeoff of the aircraft, takeoff being the hottest portion of the mission of the gas turbine engine.

Many gas turbine engines cool the turbine section by bleeding cooling flow from the compressor section or the diffuser case, routing the cooling flow through a heat exchanger to reduce the temperature of the cooling flow, and then supplying the flow to the turbine. The heat exchanger pulls cool air from the fan stream to reduce the temperature of the cooling flow, which reduces the performance of the fan section. In other designs, water is injected into the diffuser case at takeoff to cool the turbine and increase the mass flow through the turbine, resulting in increased thrust. However, injecting water into the diffuser also quenches the combustor, which can result in flameout in the combustor and unburnt fuel to exhaust from the gas turbine engine. In consideration of the above, a cooling system is needed that does not reduce the efficiency of the fan section or cause the gas turbine engine to exhaust unburnt fuel.

A prior art gas turbine engine having the features of the preamble to claim 1 is disclosed in EP 0,978,635. Other prior art gas turbine engines and methods of cooling the same are disclosed in EP 2,418,367, US 5,839,271 and GB 861,632.

### SUMMARY

In one aspect of the invention, a gas turbine engine in accordance with claim 1 is provided.

In another aspect of the invention, a method for cooling a gas turbine engine in accordance with claim 9 is provided.

Features of embodiments are recited in the dependent claims.

Persons of ordinary skill in the art will recognize that other aspects and embodiments of the present invention are possible in view of the entirety of the present disclosure, including the accompanying figures.

### BRIEF DESCRIPTION OF THE DRAWINGS

FIG. 1 is a partial cross-sectional view of a gas turbine engine.
FIG. 2 is a schematic diagram of a compressor section, a combustor section, a turbine section, and an embodiment of a cooling system.
FIG. 3 is a schematic diagram of a compressor section, a combustor section, a turbine section, and another embodiment of a cooling system.

While the above-identified drawing figures set forth one or more embodiments of the invention, other embodiments are also contemplated. In all cases, this disclosure presents the invention by way of representation and not limitation. It should be understood that numerous other modifications and embodiments can be devised by those skilled in the art, provided they fall within the scope of the appended claims. The figures may not be drawn to scale, and applications and embodiments of the present invention may include features and components not specifically shown in the drawings. Like reference numerals identify similar structural elements.

### DETAILED DESCRIPTION

The present disclosure provides a cooling system for protecting a turbine section of a gas turbine engine on an aircraft against thermal degradation and corrosion from the high temperatures of the high-speed exhaust gas flow entering the turbine section from the combustor section, especially during takeoff of the aircraft when the gas turbine engine is the hottest and most stressed. As described below with reference to the Figures, the cooling system includes a water tank that delivers steam to a tangential on-board injector that directs the steam into the turbine section.

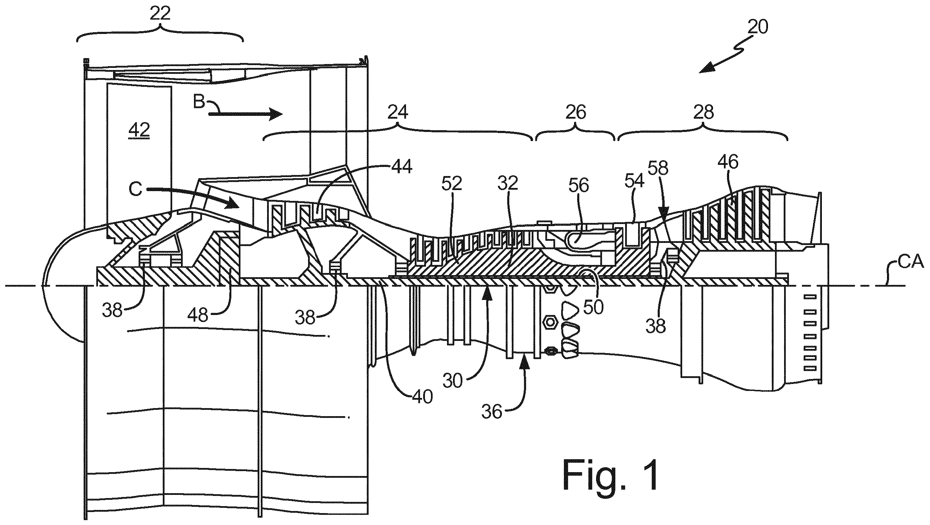

FIG. 1 is a quarter-sectional view that schematically illustrates example gas turbine engine 20 that includes fan section 22, compressor section 24, combustor section 26 and turbine section 28. Fan section 22 drives air along bypass flow path B while compressor section 24 draws air in along core flow path C where air is compressed and communicated to combustor section 26. In combustor section 26, air is mixed with fuel and ignited to generate a high pressure exhaust gas stream that expands through turbine section 28 where energy is extracted and utilized to drive fan section 22 and compressor section 24. Although the disclosed nonlimiting embodiment depicts a turbofan gas turbine engine, it should be understood that the concepts described herein are not limited to use with turbofans as the teachings may be applied to other types of turbine engines including three-spool architectures.

The example gas turbine engine 20 generally includes low speed spool 30 and high speed spool 32 mounted for rotation about center axis CA of gas turbine engine 20 relative to engine static structure 36 via several bearing assemblies 38. It should be understood that various bearing assemblies 38 at various locations may alternatively or additionally be provided.

Low speed spool 30 generally includes inner shaft 40 that connects fan 42 and low pressure (or first) compressor section 44 to low pressure (or first) turbine section 46. Inner shaft 40 drives fan 42 through a speed change device, such as geared architecture 48, to drive fan 42 at a lower speed than low speed spool 30. High-speed spool 32 includes outer shaft 50 that interconnects high pressure (or second) compressor section 52 and high pressure (or second) turbine section 54. Inner shaft 40 and outer shaft 50 are concentric and rotate via bearing assemblies 38 about center axis CA.

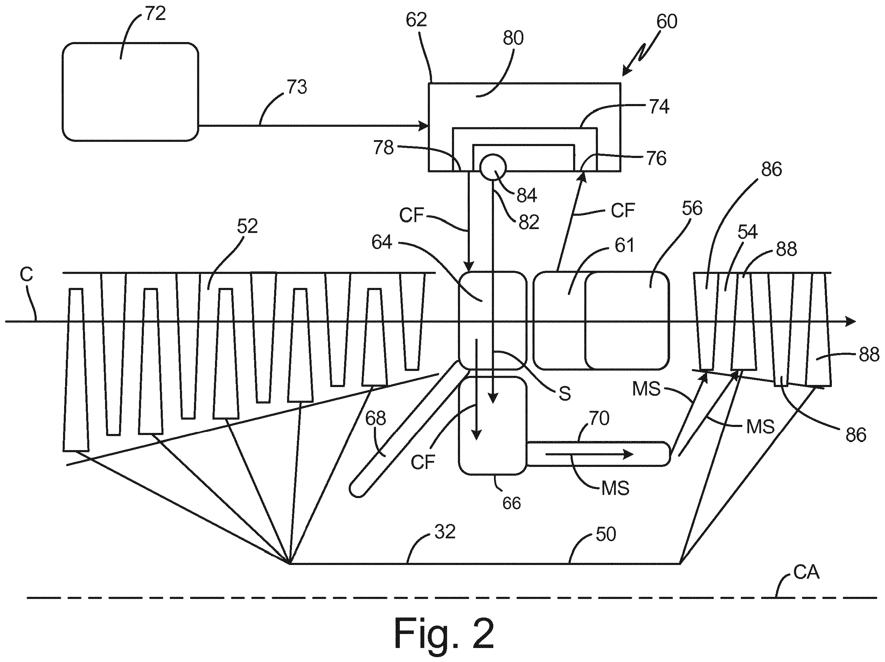

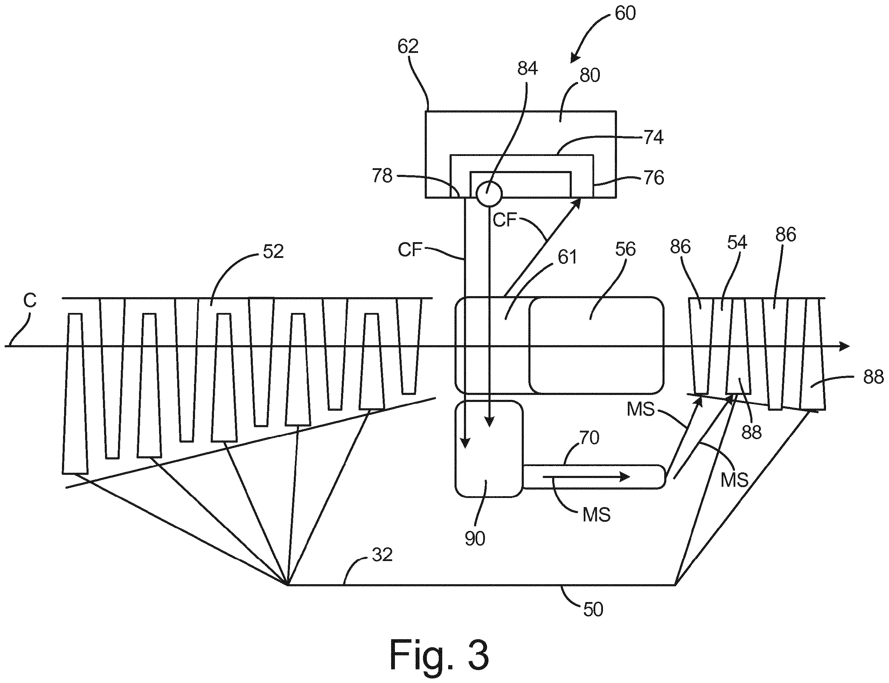

Combustor 56 is arranged between high pressure compressor 52 and high pressure turbine 54. Mid-turbine frame 58 of engine static structure 36 can be arranged generally between high pressure turbine 54 and low pressure turbine 46. Mid-turbine frame 58 further supports bearing assemblies 38 in turbine section 28 as well as setting airflow entering the low pressure turbine 46. The core airflow C is compressed first by low pressure compressor 44 and then by high pressure compressor 52 mixed with fuel and ignited in combustor 56 to produce high speed exhaust gases that are then expanded through high pressure turbine 54, mid-turbine frame 58, and low pressure turbine 46. The high speed exhaust gases have an extremely high temperature as they enter high pressure turbine 54 from combustor 56. The core airflow C at the exit of high pressure compressor 52 also has a relatively high temperature due to the high pressure of core airflow C exiting high pressure compressor 52. As discussed below with reference to FIGS. 2 and 3, cooling system 60 provides cooling air to high pressure turbine 54 and high pressure compressor 52 to cool and protect the components of high pressure turbine 54 and high pressure compressor 52 against thermal degradation and corrosion.

FIG. 2 is a schematic diagram of high pressure compressor 52, combustor 56, high pressure turbine 54, cooling system 60, and diffuser case 61. As shown in the embodiment of FIG. 2, cooling system 60 includes heat exchanger 62, outer mixing chamber 64, inner mixing chamber 66, compressor on-board injector (COBI) 68, tangential on-board injector (TOBI) 70, refill tank 72, and refill line 73. Heat exchanger 62 includes gas passage 74 with inlet 76 and outlet 78. Heat exchanger 62 further includes water tank 80 with outlet 82 and valve 84. High pressure turbine 54 includes vanes 86, and rotors 88.

Diffuser case 61 is downstream from high pressure compressor 52 and upstream of combustor 56. Diffuser case 61 guides and reduces the velocity of core airflow C before core airflow C enters combustor 56. Inside combustor 56, core airflow C is mixed with fuel, ignited, and exhausted into high pressure turbine 54 downstream from combustor 56. Vanes 86 of high pressure turbine 54 guide and turn the exhausted flow while rotors 88 extract work from the flow to power high pressure compressor 52. Cooling system 60 cools high pressure compressor 52 and high pressure turbine 54 by bleeding cooling air CF from core airflow C in diffuser case 61 and/or high pressure compressor 52, reducing the temperature of cooling air CF in heat exchanger 62, and injecting cooling air CF into high pressure compressor 52 and high pressure turbine 54. To further cool high pressure turbine 54, cooling system 60 can deliver steam S from heat exchanger 62 into high pressure turbine 54.

Heat exchanger 62 is a gas-water heat exchanger. Gas passage 74 forms a gas side of heat exchanger 62 and water tank 80 forms a water side of heat exchanger 62. Gas passage 74 extends between inlet 76 and outlet 78. In the embodiment of FIG. 2, inlet 76 of gas passage 74 is fluidically connected to diffuser case 61. Outlet 78 of gas passage 74 is fluidically connected to outer mixing chamber 64. Gas passage 74 bleeds and transports cooling air CF from diffuser case 61 to outer mixing chamber 64. At least a portion of gas passage 74 extends through water tank 80 and is enveloped by water tank 80. As cooling air CF travels through gas passage 74, heat is transferred from cooling air CF to the water in water tank 80. After passing through gas passage 74, cooling air CF is delivered through outlet 78 and into outer mixing chamber 64. COBI 68 is connected to outer mixing chamber 64 and high pressure compressor 52 and delivers a portion of cooling air CF in outer mixing chamber 64 to high pressure compressor 52 to cool high pressure compressor 52.

Inner mixing chamber 66 is fluidically connected to outer mixing chamber 64 and is positioned radially inward of outer mixing chamber 64 relative engine center axis CA. A portion of cooling flow CF in outer mixing chamber 66 is transferred to inner mixing chamber 66. TOBI 70 is connected to inner mixing chamber 66 and high pressure turbine 54 and directs cooling flow CF in inner mixing chamber 66 into high pressure turbine 54 to cool high pressure turbine 54. Outlet 82 of water tank 80 is connected to inner mixing chamber 66, and valve 84 is connected to outlet 82 to close and open outlet 82.

As heat is transferred into water tank 80 from gas passage 74, steam S is produced inside water tank 80. Once the pressure of steam S exceeds a predetermined set value, valve 84 is opened and steam S is delivered directly into inner mixing chamber 66 from outlet 82 of water tank 80. Steam S is mixed with cooling flow CF in inner mixing chamber 66, and the steam-cooling flow mixture MS is delivered to high pressure turbine 54 by TOBI 70. TOBI 70 can inject the steam-cooling flow mixture MS directly into the core flow of high pressure turbine 54. TOBI 70 can also be connected to cooling passages (not shown) inside vanes 86 and rotors 88 of high pressure turbine 54, and TOBI 70 can direct the steam-cooling flow mixture MS into the cooling passages of vanes 86 and rotors 88. After entering vanes 86 and rotors 88, the steam-cooling flow mixtures MS can bleed out of vanes 86 and rotors 88 and into the core flow via cooling holes (not shown) formed in vanes 86 and rotors 88. In summary, inner mixing chamber 66 and TOBI 70 fluidically connect water tank 80 to high pressure turbine 54 and deliver steam S in addition to cooling flow CF to high pressure turbine 54. Outer mixing chamber 64 and COBI 68 do not receive or deliver steam S to high pressure compressor 52, thus, steam S is only introduced into the core flow downstream of combustor 56. Steam S can be delivered to high pressure turbine 54 only during the peak operating levels of gas turbine engine 20, such as during takeoff of an aircraft employing gas turbine engine 20, when the temperatures inside high pressure turbine 54 traditionally reach their maximum level. By introducing steam into high pressure turbine 54 during takeoff, the temperatures inside high pressure turbine 54 do not reach the same maximums as experienced in prior art gas turbine engines. With maximum temperatures reduced inside high pressure turbine 54, high pressure turbine 54 can be built lighter to offset the weight of water tank 80.

Refill tank 72 is a water storage tank connected to water tank 80 by refill line 73 and refills water tank 80 with water as steam S leaves water tank 80. While water tank 80 and heat exchanger 62 are located on gas turbine engine 20, refill tank 72 can be located off of gas turbine engine 20, such as in a fuselage or wing of an aircraft. Cleaning agents (not shown) can be added to the water in refill tank 72 and water tank 80. The cleaning agents added to the water in refill tank 72 and water tank 80 can be transferred to high pressure turbine 54 with steam S to clean the components of high pressure turbine 54 during operation of gas turbine engine 20.

FIG. 3 is a schematic diagram with another embodiment of cooling system 60 with a single mixing chamber 90. As shown in FIG. 3, both outlet 78 of gas passage 74 and outlet 82 of water tank 80 are connected directly to mixing chamber 90. Mixing chamber 90 receives cooling flow CF from outlet 78 of gas passage 74 and steam S from outlet 82 of water tank 80. Cooling flow CF and steam S mix together inside mixing chamber 90 into a combined steam-cooling flow mixture MS. The steam-cooling flow mixture MS is delivered to high pressure turbine 54 by tangential on-board injector (TOBI) 70, which is connected to mixing chamber 90 and high pressure turbine 54. In other embodiments, steam S can be carried in water-tight passages (not shown) through combustor 56 to cool combustor 56 before steam S is directed into high pressure turbine 54 and released into the core flow in high pressure turbine 54. The water-tight passages can be channels (not shown) formed in the paneling of combustor 56, or small finned tubes formed between panels of combustor 56. Steam S is not released into combustor 56 so as to avoid flameout or over-quench.

In view of the foregoing description, it will be recognized that the present disclosure provides numerous advantages and benefits. For example, the present disclosure provides cooling system 60 with water tank 80. Water tank 80 provides a source for steam S that is injected into high pressure turbine 54 via mixing chambers 66/90 and TOBI 70. Cooling system 60 injects steam into high pressure turbine 54, which cools high pressure turbine 54 more effectively than cooling air alone. Because steam S is injected directly into high pressure turbine 54, steam S does not impact the performance of combustor 56 or cause flameout in combustor 56.

Any relative terms or terms of degree used herein, such as "substantially", "essentially", "generally", "approximately", and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, incidental alignment variations, transitory vibrations and sway movements, temporary alignment or shape variations induced by operational conditions, and the like.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A gas turbine engine (20) comprising:
a compressor section (24);
a diffuser case (61) downstream from the compressor section (24);
a combustor section (26) downstream from the diffuser case (61);
a turbine section (28) downstream from the combustor section (26); and
a water tank (80) comprising an outlet (82);
an injector (70) fluidically connected to the outlet (82) of the water tank (80) and to the turbine section (28), wherein the injector (70) is configured to direct steam (S) from the water tank (80) into the turbine section (28); and **characterised by**
a heat exchanger (62) comprising:
the water tank (80);
a gas passage (74) with an inlet (76) fluidically connected to the compressor section (24) or the diffuser case (61) and an outlet (78) fluidically connected to the injector (70), wherein the gas passage (74) is in thermal communication with the water tank (80); and
a valve (84) between the outlet (82) of the water tank (80) and the injector (70), wherein the valve (84) is configured to open when pressure in the water tank (80) exceeds a set value.

2. The gas turbine engine of claim 1, wherein at least a portion of the gas passage (74) extends through the water tank (80).

3. The gas turbine engine of claim 1 or 2, wherein the outlet of the gas passage (74) is connected to a first mixing chamber (64), and the first mixing chamber (64) is connected to a second mixing chamber (66), wherein the second mixing chamber (66) connects the outlet (82) of the water tank (80) to the injector (70).

4. The gas turbine engine of claim 3, wherein the second mixing chamber (68) is radially inward from the first mixing chamber (64) relative a center axis (C) of the gas turbine engine (20).

5. The gas turbine engine of claim 3 or 4, wherein a compressor on-board injector (COBI) fluidically connects the first mixing chamber (64) to the compressor section (24).

6. The gas turbine engine of claim 1 or 2, wherein a mixing chamber (90) is connected to the outlet (82) of the water tank (80) and configured to receive steam (S) from the outlet (82) of the water tank (80), wherein the injector (70) is connected to the mixing chamber (90) and configured to receive steam from the mixing chamber (90).

7. The gas turbine engine of any preceding claim, wherein the injector (70) is a tangential on-board injector (TOBI).

8. The gas turbine engine of any preceding claim, wherein the injector (70) is connected to cooling passages inside airfoils in the turbine section (28).

9. A method for cooling the gas turbine engine (20) of any preceding claim, the method comprising:
bleeding cooling flow (CF) from a core flow (C) upstream of the combustor section (26);
reducing the temperature of the cooling flow (CF) by directing the cooling flow (CF) through the heat exchanger (62), which is a gas-water heat exchanger (62);
directing the cooling flow (CF) from the gas-water heat exchanger (62) to the turbine section (28); and
directing steam (S) from a water side of the gas-water heat exchanger (62) into the turbine section (28).

10. The method of claim 9, wherein the steam (S) is directed into the turbine section (28) when pressure inside the water side of the gas-water heat exchanger (62) exceeds a set value.

11. The method of claim 9 or 10, wherein the steam (S) is carried in water-tight passages through the combustor section (26) before the steam (S) is directed into the turbine section (28) and released in the turbine section (28).

12. The method of claim 9, 10 or 11, further comprising:
refilling the water side of the gas-water heat exchanger (62) with water from a storage tank (72).

13. The method of any of claims 9 to 12, further comprising:
cleaning the turbine section (28) by adding cleaning agents into the water side of the gas-water heat exchanger (62); and
directing the cleaning agents to the turbine section (28) when the steam (S) from the water side of the gas-water heat exchanger (62) is directed into the turbine section (28).

14. The method of any of claims 9 to 13, wherein the steam (S) is directed into cooling passages inside airfoils in the turbine section (28) and bled into the core flow (C) via cooling holes in the airfoils.

15. The method of any of claims 9 to 14, further comprising:
mixing the steam (S) and at least a portion of the cooling flow (CF) before directing the steam (S) into the turbine section (28).

## Patentansprüche

1. Gasturbinentriebwerk (20), umfassend:
einen Verdichterabschnitt (24);
ein Diffusorgehäuse (61), das dem Verdichterabschnitt (24) nachgelagert ist;
einen Brennkammerabschnitt (26), der dem Diffusorgehäuse (61) nachgelagert ist;
einen Turbinenabschnitt (28), der dem Verdichterbereich (26) nachgelagert ist; und
einen Wassertank (80), der einen Auslass (82) umfasst;
einen Injektor (70), der strömungsmäßig mit dem Auslass (82) des Wassertanks (80) und mit dem Turbinenabschnitt (28) verbunden ist, wobei der Injektor (70) konfiguriert ist, um Dampf (S) aus dem Wassertank (80) in den Turbinenabschnitt (28) zu leiten; und
**gekennzeichnet durch**
einen Wärmetauscher (62), umfassend:
den Wassertank (80);
einen Gasdurchgang (74) mit einem Einlass (76), der strömungsmäßig mit dem Verdichterabschnitt (24) oder dem Diffusorgehäuse (61) verbunden ist, und einem Auslass (78), der strömungsmäßig mit dem Injektor (70) verbunden ist, wobei der Gasdurchgang (74) in thermischer Verbindung mit dem Wassertank (80) steht; und
ein Ventil (84) zwischen dem Auslass (82) des Wassertanks (80) und dem Injektor (70), wobei das Ventil (84) konfiguriert ist, um sich zu öffnen, wenn der Druck im Wassertank (80) einen Sollwert überschreitet.

2. Gasturbinentriebwerk nach Anspruch 1, wobei sich zumindest ein Abschnitt des Gasdurchgangs (74) durch den Wassertank (80) erstreckt.

3. Gasturbinentriebwerk nach Anspruch 1 oder 2, wobei der Auslass des Gasdurchgangs (74) mit einer ersten Mischkammer (64) verbunden ist und die erste Mischkammer (64) mit einer zweiten Mischkammer (66) verbunden ist, wobei die zweite Mischkammer (66) den Auslass (82) des Wassertanks (80) mit dem Injektor (70) verbindet.

4. Gasturbinentriebwerk nach Anspruch 3, wobei die zweite Mischkammer (68) radial innerhalb der ersten Mischkammer (64) relativ zu einer Mittelachse (C) der Gasturbinentriebwerk (20) angeordnet ist.

5. Gasturbinentriebwerk nach Anspruch 3 oder 4, wobei ein On-Board-Injektor des Verdichters (compressor on-board injector, COBI) die erste Mischkammer (64) strömungstechnisch mit dem Verdichterabschnitt (24) verbindet.

6. Gasturbinentriebwerk nach Anspruch 1 oder 2, wobei eine Mischkammer (90) mit dem Auslass (82) des Wassertanks (80) verbunden und konfiguriert ist, um Dampf (S) von dem Auslass (82) des Wassertanks (80) zu empfangen, wobei der Injektor (70) mit der Mischkammer (90) verbunden und konfiguriert ist, um Dampf von der Mischkammer (90) zu empfangen.

7. Gasturbinentriebwerk nach einem der vorhergehenden Ansprüche, wobei der Injektor (70) ein tangentialer On-Board-Injektor (tangential on-board injector, TOBI) ist.

8. Gasturbinentriebwerk nach einem der vorhergehenden Ansprüche, wobei der Injektor (70) mit Kühldurchgängen innerhalb von Schaufeln in dem Turbinenabschnitt (28) verbunden ist.

9. Verfahren zum Kühlen des Gasturbinentriebwerks (20) nach einem der vorhergehenden Ansprüche, wobei das Verfahren Folgendes umfasst:
Abzweigen von Kühlstrom (cooling flow, CF) aus einem Kernstrom (C) vor dem Brennkammerabschnitt (26);
Reduzieren der Temperatur des Kühlstroms (CF) durch Leiten des Kühlstroms (CF) durch den Wärmetauscher (62), der ein Gas-Wasser-Wärmetauscher (62) ist;
Leiten des Kühlstroms (CF) von dem Gas-Wasser-Wärmetauscher (62) zu dem Turbinenabschnitt (28); und
Leiten von Dampf (S) von einer Wasserseite des Gas-Wasser-Wärmetauschers (62) in den Turbinenabschnitt (28).

10. Verfahren nach Anspruch 9, wobei der Dampf (S) in den Turbinenabschnitt (28) geleitet wird, wenn der Druck innerhalb der Wasserseite des Gas-Wasser-Wärmetauschers (62) einen Sollwert überschreitet.

11. Verfahren nach Anspruch 9 oder 10, wobei der Dampf (S) in wasserdichten Durchgängen durch den Brennkammerabschnitt (26) geführt wird, bevor der Dampf (S) in den Turbinenabschnitt (28) geleitet und in dem Turbinenabschnitt (28) freigesetzt wird.

12. Verfahren nach Anspruch 9, 10 oder 11, ferner umfassend:
Nachfüllen der Wasserseite des Gas-Wasser-Wärmetauschers (62) mit Wasser aus einem Speichertank (72).

13. Verfahren nach einem der Ansprüche 9 bis 12, ferner umfassend:
Reinigen des Turbinenabschnitts (28) durch Zugeben von Reinigungsmitteln in die Wasserseite des Gas-Wasser-Wärmetauschers (62); und
Leiten der Reinigungsmittel zu dem Turbinenabschnitt (28), wenn der Dampf (S) von der Wasserseite des Gas-Wasser-Wärmetauschers (62) in den Turbinenabschnitt (28) geleitet wird.

14. Verfahren nach einem der Ansprüche 9 bis 13, wobei der Dampf (S) in Kühldurchgänge innerhalb von Schaufeln in dem Turbinenabschnitt (28) geleitet und über Kühllöcher in den Schaufeln in den Kernstrom (C) abgezweigt wird.

15. Verfahren nach einem der Ansprüche 9 bis 14, ferner umfassend:
Mischen des Dampfs (S) und mindestens eines Abschnitts des Kühlstroms (CF), bevor der Dampf (S) in den Turbinenabschnitt (28) geleitet wird.

## Revendications

1. Moteur à turbine à gaz (20) comprenant :
une section de compresseur (24) ;
un carter de diffuseur (61) en aval de la section de compresseur (24) ;
une section de chambre de combustion (26) en aval du carter de diffuseur (61) ;
une section de turbine (28) en aval de la section de chambre de combustion (26) ; et
un réservoir d'eau (80) comprenant une sortie (82) ;
un injecteur (70) relié fluidiquement à la sortie (82) du réservoir d'eau (80) et à la section de turbine (28), dans lequel l'injecteur (70) est configuré pour diriger de la vapeur (S) du réservoir d'eau (80) vers la section de turbine (28) ; et
**caractérisé par**
un échangeur de chaleur (62) comprenant :
le réservoir d'eau (80) ;
un passage de gaz (74) avec une entrée (76) reliée fluidiquement à la section de compresseur (24) ou au carter de diffuseur (61) et une sortie (78) reliée fluidiquement à l'injecteur (70), dans lequel le passage de gaz (74) est en communication thermique avec le réservoir d'eau (80) ; et
une soupape (84) entre la sortie (82) du réservoir d'eau (80) et l'injecteur (70), dans lequel la soupape (84) est configurée pour s'ouvrir lorsque la pression dans le réservoir d'eau (80) dépasse une valeur définie.

2. Moteur à turbine à gaz selon la revendication 1, dans lequel au moins une partie du passage de gaz (74) s'étend à travers le réservoir d'eau (80).

3. Moteur à turbine à gaz selon la revendication 1 ou 2, dans lequel la sortie du passage de gaz (74) est reliée à une première chambre de mélange (64), et la première chambre de mélange (64) est reliée à une seconde chambre de mélange (66), dans lequel la seconde chambre de mélange (66) relie la sortie (82) du réservoir d'eau (80) à l'injecteur (70).

4. Moteur à turbine à gaz selon la revendication 3, dans lequel la seconde chambre de mélange (68) est située radialement vers l'intérieur à partir de la première chambre de mélange (64) par rapport à un axe central (C) du moteur à turbine à gaz (20).

5. Moteur à turbine à gaz selon la revendication 3 ou 4, dans lequel un injecteur embarqué de compresseur (COBI) relie fluidiquement la première chambre de mélange (64) à la section de compresseur (24).

6. Moteur à turbine à gaz selon la revendication 1 ou 2, dans lequel une chambre de mélange (90) est reliée à la sortie (82) du réservoir d'eau (80) et configurée pour recevoir de la vapeur (S) de la sortie (82) du réservoir d'eau (80), dans lequel l'injecteur (70) est relié à la chambre de mélange (90) et configuré pour recevoir de la vapeur de la chambre de mélange (90) .

7. Moteur à turbine à gaz selon une quelconque revendication précédente, dans lequel l'injecteur (70) est un injecteur embarqué tangentiel (TOBI).

8. Moteur à turbine à gaz selon une quelconque revendication précédente, dans lequel l'injecteur (70) est relié à des passages de refroidissement à l'intérieur des profils aérodynamiques dans la section de turbine (28).

9. Procédé de refroidissement du moteur à turbine à gaz (20) selon une quelconque revendication précédente, le procédé comprenant :
l'évacuation de flux de refroidissement (CF) à partir d'un flux central (C) en amont de la section de chambre de combustion (26) ;
la réduction de la température du flux de refroidissement (CF) en dirigeant le flux de refroidissement (CF) à travers l'échangeur de chaleur (62), qui est un échangeur de chaleur gaz-eau (62) ;
le fait de diriger le flux de refroidissement (CF) à partir de l'échangeur de chaleur gaz-eau (62) vers la section de turbine (28) ; et
le fait de diriger la vapeur (S) d'un côté eau de l'échangeur de chaleur gaz-eau (62) vers la section de turbine (28).

10. Procédé selon la revendication 9, dans lequel la vapeur (S) est dirigée vers la section de turbine (28) lorsque la pression à l'intérieur du côté eau de l'échangeur de chaleur gaz-eau (62) dépasse une valeur définie.

11. Procédé selon la revendication 9 ou 10, dans lequel la vapeur (S) est transportée dans des passages étanches à l'eau à travers la section de chambre de combustion (26) avant que la vapeur (S) ne soit dirigée vers la section de turbine (28) et libérée dans la section de turbine (28).

12. Procédé selon la revendication 9, 10 ou 11, comprenant en outre :
le rechargement du côté eau de l'échangeur de chaleur gaz-eau (62) avec de l'eau provenant d'un réservoir de stockage (72).

13. Procédé selon l'une quelconque des revendications 9 à 12, comprenant en outre :
le nettoyage de la section de turbine (28) en ajoutant des agents de nettoyage dans le côté eau de l'échangeur de chaleur gaz-eau (62) ; et
le fait de diriger les agents de nettoyage vers la section de turbine (28) lorsque la vapeur (S) provenant du côté eau de l'échangeur de chaleur gaz-eau (62) est dirigée vers la section de turbine (28).

14. Procédé selon l'une quelconque des revendications 9 à 13, dans lequel la vapeur (S) est dirigée vers des passages de refroidissement à l'intérieur des profils aérodynamiques dans la section de turbine (28) et évacuée dans le flux central (C) par l'intermédiaire de trous de refroidissement dans les profils aérodynamiques.

15. Procédé selon l'une quelconque des revendications 9 à 14, comprenant en outre :
le mélange de la vapeur (S) et d'au moins une partie du flux de refroidissement (CF) avant de diriger la vapeur (S) vers la section de turbine (28).
